# EUROPEAN PATENT SPECIFICATION

(11) **EP 2 428 018 B1**
(45) Date of publication and mention of the grant of the patent: **18.09.2019**
(21) Application number: 10772328.0
(22) Date of filing: 14.01.2010
(51) Int. Cl.: H04L 29/06, G06F 21/00, H04W 28/00

(54) **A SYSTEM AND METHOD FOR CONTROLLING POLICY DISTRIBUTION WITH PARTIAL EVALUATION**
SYSTEM UND VERFAHREN ZUR STEUERUNG EINER RICHTLINIENVERTEILUNG MIT PARTIELLER BEWERTUNG
SYSTÈME ET PROCÉDÉ PERMETTANT DE RÉGULER UNE DISTRIBUTION DE POLITIQUE AVEC UNE ÉVALUATION PARTIELLE

(30) Priority: 07.05.2009 SE 0950322
(43) Date of publication of application: 14.03.2012
(73) Proprietor: Axiomatics AB, 111 24 Stockholm (SE)
(72) Inventor: RISSANEN, Erik, S-103 14 Stockholm (SE)
(74) Representative: AWA Sweden AB
(86) International application number: PCT/SE2010/050035
(87) International publication number: WO 2010/128926

(56) References cited:
- EP-A1- 1 927 930
- WO-A1-2005/009003
- WO-A1-2005/009003
- WO-A1-2008/046227
- US-A1- 2006 041 666
- US-A1- 2006 041 666
- US-A1- 2006 200 664
- US-A1- 2008 184 336
- US-A1- 2009 228 951

## Description

### Field of the invention

The present invention relates in a first aspect to a system operable to control policy distribution with partial evaluation in order to permit/deny access to a protected means.

According to a second aspect the present invention relates to a method for controlling policy distribution with partial evaluation in order to permit/deny access to a protected means.

According to a third aspect the present invention relates to at least one computer program product for controlling policy distribution with partial evaluation in order to permit/deny access to a protected means.

### Background of the invention

XACML is an access control policy language. In practical use of XACML a large enterprise will have many different resources and lots of policies about different resources. There is a desire to make management of the policies easy to handle.

It is desirable to centralize the machinery for policy management so it is easy to manage all the policies, rather than having lots of policies spread around all over with little control over them.

It is also desirable to make the "physical" distance between a PEP (Policy Enforcement Point) and a PDP (Policy Decision Point) short for performance reasons. Sending each request to a single central PDP in a large enterprise does not scale well. The load on the PDP will get high and the delay from the request and response in transit over a network will degrade performance.

So it is desirable to have many PDPs around, close to the resources. These many PDPs need to be managed efficiently. Each PDP must receive the right policies about those resources (or perhaps users) which they receive requests about. But at the same time it is desirable to hide this machinery of many PDPs from the administration, and present a consolidated view of the whole enterprise to the administrators.

Existing approaches to policy distribution as e. g. set out in WO 2010/128926 and US 2006/0041666 have a lot of problems.

One approach is to distribute all policies to all PDPs. This is simple and the whole enterprise looks like a single PDP to the administrators. However, distributing all policies is inefficient, because there is an overhead in network communications sending policies which are not needed at each PDP. Each PDP will have a large set of policies to evaluate, which degrades runtime performance.

Furthermore, distributing all policies may be undesirable, because policies may be sensitive/confidential and must not be disclosed to any PDP.

Another approach is to manually decide which policies to send to which PDP. However, this represents an administrative overhead and is prone to error.

A third approach is to use a subset of XACML for control over distribution, for instance the XACML standard has a "profile" (an additional extra piece of "appendix" we could say) by which it is possible to request a policy based on matching of the top level target only. However, this represents an administrative overhead since the policies must be kept in this form. Besides, it does not allow distribution of any XACML policy, since the policies must be in a special form where the top level target is used for distribution control. Furthermore, it is prone to error.

### Summary of the invention

The above mentioned problems are solved by a system operable to control policy distribution with partial evaluation in order to permit/deny access to a protected means according to Claim 1. The system comprises a storing means operable to store all access control policy functions for all protected means. The system also comprises a guard means operable to guard access to a protected means and to construct an access control request comprising attributes regarding the protected means. Furthermore, the system also comprises a policy decision means connected to the guard means and operable to receive the access control request from the guard means. The system also comprises a policy distribution means connected to the storing means, and to the policy decision means. The policy decision means is also operable to collect the static attributes of the protected means, and to send the static attributes to the policy distribution means, which in turn is operable to construct a partial access control request from the static attributes of the protected means, and to perform partial evaluation against the access control policy function stored in the storing means, resulting in a simplified access control policy function. The policy distribution means is operable to send the simplified access control policy function to the policy decision means, which in turn is operable to use the simplified access control policy function to evaluate access control requests regarding the protected means, and to return a permit/deny response to the guard means.

The main advantages with this system can be summarised in below. Policies are distributed automatically to the right resource/protected means without administrator intervention or coordination. It works for any kind of XACML policy, though some policies can be "simplified" more than others. We get a consolidated policy view for administrators for the whole enterprise. Furthermore, each PEP/guard means can get a set of resource/protected means specific policies which are located close to the PEP, and are "minimal" in that they apply only to the specific resource and all static attributes have already been calculated in the policies.

A further advantage in this context is achieved if each protected means is a resource, a subject, an action, an environment, or a combination of two or more of these alternatives.

Furthermore, it is an advantage in this context if the system also comprises an input means connected to the storing means, and operable to input a new access control policy function or to amend an access control policy function in the storing means.

A further advantage in this context is achieved if each protected means is connected to the guard means closest to the protected means.

Furthermore, it is an advantage in this context if the storing means is in the form of a database.

A further advantage in this context is achieved if the attributes are in the form of attributes which are present, attributes which are not present and attributes which are undefined.

The above mentioned problems are also solved with a method for controlling policy distribution with partial evaluation in order to permit/deny access to a protected means according to Claim 8. The method is performed with the aid of a system. The method comprises the steps:
- with the aid of a policy decision means connected to a guard means, both comprised in the system, to collect the static attributes of the protected means;
- to send the static attributes to a policy distribution means comprised in the system and connected to the policy decision means, and to a storing means comprised in the system and operable to store all access control policy functions for all protected means;
- to construct a partial access control request from the static attributes of the protected means;
- to perform partial evaluation against the access control policy function stored in the storing means, resulting in a simplified access control policy function;
- to send the simplified access control policy function to the policy decision means;
- with the aid of the guard means, to construct an access control request comprising attributes regarding the protected means;
- to send the access control request to the policy decision means;
- to use the simplified access control policy function to evaluate access control requests regarding the protected means; and
- to return a permit/deny response to the guard means.

The main advantages with this method can be summarised in below. Policies are distributed automatically to the right resource/protected means without administrator intervention or coordination. It works for any kind of XACML policy, though some policies can be "simplified" more than others. We get a consolidated policy view for administrators for the whole enterprise. Furthermore, each PEP/guard means can get a set of resource/protected means specific policies which are located close to the PEP, and are "minimal" in that they apply only to the specific resource and all static attributes have already been calculated in the policies.

A further advantage in this context is achieved if each protected means is a resource, a subject, an action, an environment, or a combination of two or more of these alternatives.

Furthermore, it is an advantage in this context if the method also comprises the step:
- with the aid of an input means comprised in the system and connected to the storing means, to input a new access control policy function, or to amend an access control policy function in the storing means.

A further advantage in this context is achieved if the attributes are in the form of attributes which are present, attributes which are not present and attributes which are undefined.

Furthermore, it is an advantage in this context if the step to perform partial evaluation is performed by substituting the attributes which are present in the partial access control request with values into the access control policy function.

The above mentioned problems are also solved with at least one computer program product according to Claim 14. The at least one computer program product is/are directly loadable into the internal memory of at least one digital computer, and comprises software code portions for performing the steps of the method according the present invention when the at least one product is/are run on the at least one computer.

The main advantages with this computer program product can be summarised in below. Policies are distributed automatically to the right resource/protected means without administrator intervention or coordination. It works for any kind of XACML policy, though some policies can be "simplified" more than others. We get a consolidated policy view for administrators for the whole enterprise. Furthermore, each PEP/guard means can get a set of resource/protected means specific policies which are located close to the PEP, and are "minimal" in that they only apply to the specific resource and all static attributes have already been calculated in the policies.

It will be noted that the term "comprises/comprising" as used in this description is intended to denote the presence of a given characteristic, step or component, without excluding the presence of one or more other characteristic, features, integers, steps, components or groups thereof.

Embodiments of the invention will now be described with a reference to the accompanying drawings, in which:

### Brief description of the drawings

Fig. 1 is a block diagram of the XACML architecture according to prior art;
Fig. 2 is a block diagram of a system operable to control policy distribution with partial evaluation in order to permit/deny access to a protected means according to the present invention;
Fig. 3 is a flow chart of a method for controlling policy distribution with partial evaluation in order to permit/deny access to a protected means according to the present invention; and
Fig. 4 schematically shows a number of computer program products according to the present invention.

### Detailed description of the preferred embodiments

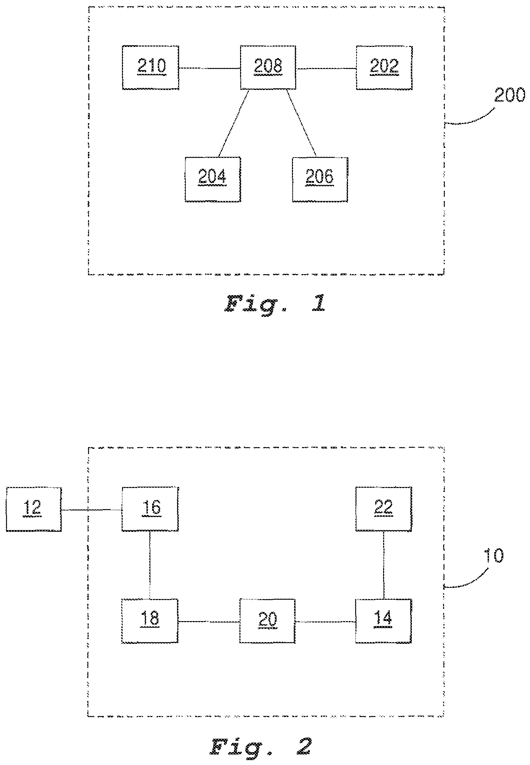

In fig. 1 there is disclosed a block diagram of the XACML architecture 200, although simplified, according to the prior art. As stated before, XACML is an access control policy language. An attempt to access a resource 202 is described in terms of a "Request", which lists attributes of the subject 204, the resource 202, the action and the environment 206. Most kinds of "facts" about the subject 204, resource 202, action and environment 206 can be described in terms of attributes. An attribute is an identifier, a data type and a value. It can also be described as a variable with a name (the identifier), a data type and a value.

The request is constructed by a Policy Enforcement Point, PEP 208. The purpose of a PEP 208 is to guard access to a resource 202 and let only authorized users through. The PEP 208 itself does not know who is authorized, rather it submits the request to a Policy Decision Point, PDP 210, which contain policies about which requests that shall be permitted respective denied. The PDP 210 evaluates the policies, and returns a permit/deny response to the PEP 208. The PEP 208 then either lets the access proceed or stops it.

The fundamental purpose with this architecture is to establish separation of concerns, that is, to differentiate between policy decision making and policy enforcement. Enforcement is by its nature specific to a particular resource 202, while a decision engine can be made general purpose and reusable.

In general policies can be nested in a tree form. Different policies are combined using so called combining algorithms which define which policy takes precedence over another.

In fig. 2 there is disclosed a block diagram of a system 10 operable to control policy distribution with partial evaluation in order to permit/deny access to protected means 12 according to the present invention. The system 10 comprises a storing means 14 operable to store all access control policy functions for all protected means 12. It is pointed out that for the sake of simplicity there is only disclosed one protected means 12 in fig. 2. Furthermore, the system 10 also comprises a guard means 16 connected to the protected means 12, and operable to guard access to the protected means 12, and to construct an access control request comprising attributes regarding the protected means 12. As is apparent in fig. 2, the system 10 also comprises a policy decision means 18 connected to the guard means 16 and operable to receive the access control request from the guard means 16. Furthermore, the system 10 comprises a policy distribution means 20 connected to the storing means 14 and to the policy decision means 18. The policy decision means 18 is in turn also operable to collect the static attributes of the protected means 12, and to send the static attributes to the policy distribution means 20. Furthermore, the policy distribution means 20 is operable to construct a partial access control request from the static attributes of the protected means 12, and to perform partial evaluation against the access control policy function stored in the storing means 14, resulting in a simplified access control policy function. The policy distribution means 20 is thereafter operable to send the simplified access control policy function to the policy decision means 18, which in turn is operable to use the simplified access control policy function to evaluate access control requests regarding the protected means 12, and to return a permit/deny response to the guard means 16.

According to a preferred embodiment of the system 10, each protected means 12 is a resource, a subject, an action, an environment, or a combination of two or more of these alternatives.

Furthermore, according to another embodiment the system 10 also comprises an input means 22 connected to the storing means 14 (see fig. 2). The input means 22 is operable to input a new access control policy function or to amend an access control policy function in the storing means 14.

According to another preferred embodiment of the system 10, each protected means 12 is connected to the guard means 16 closest to the protected means 12. Although it is not disclosed in fig. 2, it is pointed out that there can be several protected means 12 connected to the same guard means 16.

Furthermore, according to another alternative the storing means 14 is in the form of a database 14.

The attributes can be partitioned into attributes which are present, attributes which are not present and attributes which are undefined. Since these three sets partition the set of possible attributes, it is necessary to only define two of them and the third is implied. Typically, the set of attributes which are present and the set of undefined attributes are explicitly listed in an actual request, but this need not always to be the case.

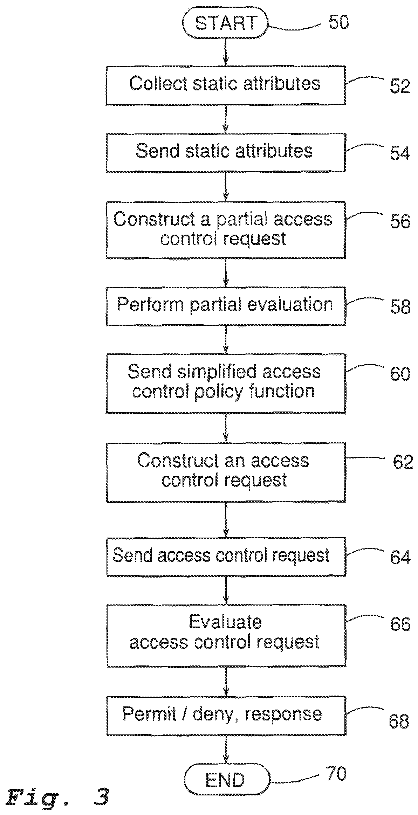

In fig. 3 there is disclosed a flow chart of a method for controlling policy distribution with partial evaluation in order to permit/deny access to a protected means 12 (see fig. 2) according to the present invention. The method begins at block 50. The method continues, at block 52, with the step: with the aid of the policy decision means 18 connected to the guard means 16, to collect the static attributes of the protected means 12. Thereafter, the method continues, at block 54, with the step: to send the static attributes to the policy distribution means 20 comprised in the system 10 and connected to the policy decision means 18, and to the storing means 14. The storing means 14 is operable to store all access control policy functions for all protected means 12. The method continues, at block 56, with the step: to construct a partial access control request from the static attributes of the protected means 12. This is performed by the policy distribution means 20. Thereafter, the method continues, at block 58, with the step: to perform partial evaluation against the access control policy function stored in the storing means 14, resulting in a simplified access control policy function. This is also performed by the policy distribution means 20. The method continues, at block 60, with the step: to send the simplified access control policy function to the policy decision means 18. This is also performed by the policy distribution means 20. Thereafter, the method continues, at block 62, with the step: with the aid of the guard means 16, to construct an access control request comprising attributes regarding the protected means 12. The method continues, at block 64, with the step: to send the access control request to the policy decision means 18. This is performed by the guard means 16. Thereafter, the method continues, at block 66, with the step: to use the simplified access control policy function to evaluate access control requests regarding the protected means 12. The method continues, at block 68, with the step: to return a permit/deny response to the guard means 16. This is performed by the policy decision means 18. The method is completed at block 70.

According to a preferred embodiment of the method, each protected means 12 is a resource, a subject, an action, an environment, or a combination of two or more of these alternatives.

According to another embodiment, the method also comprises the step: with the aid of the input means 22 comprised in the system 10 and connected to the storing means 14, to input a new access control policy function, or to amend an access control policy function in the storing means 14.

Furthermore, the attributes can be partitioned into attributes which are present, attributes which are not present and attributes which are undefined. Since these three sets partition the set of possible attributes, it is necessary to only define two of them and the third is implied. Typically, the set of attributes which are present and the set of undefined attributes are explicitly listed in an actual request, but this need not always to be the case.

According to a preferred embodiment of the method, the step to perform partial evaluation is performed by substituting the attributes which are present in the partial access control request with values into the access control policy function.

Partial evaluation works on an access control policy language. The policy language consists of functional expressions. The access control policy is a functional expression formed by nesting the functional components of the language. At the leaf level in the functional tree, there are references to the attributes in the access control request, such that selected attributes from the access control request form the inputs to the arguments of the access control policy function.

Thus the access control policy has a form such as below.
F1(F2(F3(A1, A2, ...), F4(A3, A4, ...), F5(A5, A6, ...), ...))
where F1, F2 and so on denote functions, and A1, A2 and so on denote references to attributes in the access control request. Each function may take any number of arguments and the functions may be nested arbitrarily deep. The topmost function (F1 in this case) returns an access control decision Permit, Deny or any of a number of error or diagnostic codes. Nested functions may return any data type.

A partial request is an access control request which does not contain all the attributes which are expected in a full access control request. Partial evaluation is performed by substituting the attributes which are present in the partial request into the access control policy function and evaluating the function as far as possible. For instance, if in the above given example, A2, A5 and A6 are present in the partial request, but the other attributes are not, the function can be substituted as follows:
F1(F2(F3(A1, a2, ...), F4(A3, A4, ...), F5(a5, a6, ...), ...))
where a2, a5 and a6 denote the values for the attributes A2, A5 and A6 respectively.

It may be possible to simplify the function further since given the values of some attributes, some functions may be determined regardless of the value of the other arguments. For instance, the Boolean function AND(A8, A9, A10) can be evaluated to False if it can be found that at least one of its arguments is False.

Thus, partial evaluation results in a simplified access control policy function, where parts of, or the full original access control policy function may be determined. For instance, the above given example might simplify into a new function:
F1(F2(F6(A1, A4)))

The new access control policy function will give the same result as the original to each full request, as long as the full access control request contains the attributes which were defined in the partial request.

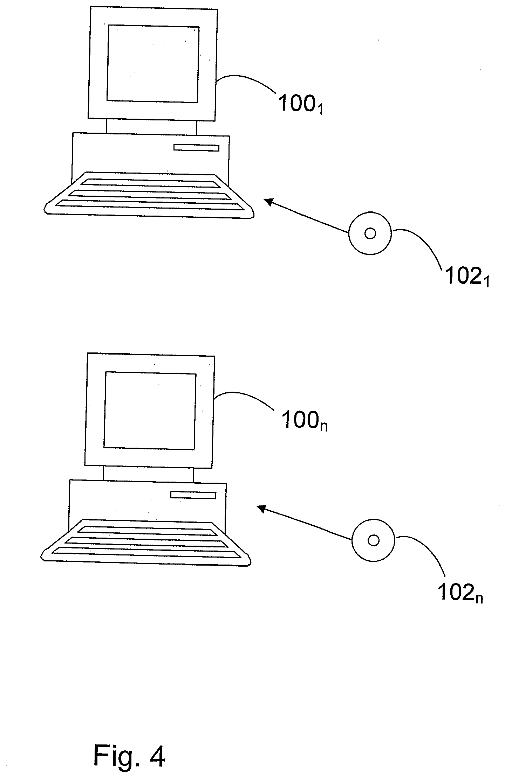

In fig. 4, some computer program products 102₁, ..., 102ₙ according to the present invention are schematically shown. In fig. 4, n different digital computers 100₁, ..., 100ₙ are shown, where n is an integer. In fig. 4, n different computer program products 102₁, ..., 102ₙ are shown, here shown in the form of CD discs. The different computer program products 102₁, ..., 102ₙ are directly loadable into the internal memory of the n different computers 100₁, ..., 100ₙ. Each computer program product 102₁, ..., 102ₙ comprises software code portions for performing all the steps according to fig. 3, when the product/products 102₁, ..., 102ₙ is/are run on the computers 100₁, ..., 100ₙ. The computer program products 102₁, ..., 102ₙ may, for instance, be in the form of diskettes, RAM discs, magnetic tapes, magneto-optical discs or some other suitable products.

The invention is not limited to the described embodiments. It will be evident for those skilled in the art that many different modifications are feasible within the scope of the following Claims.

## Claims

1. A policy distribution means (20) adapted to operate in a system (10) operable to control distribution of an access control policy to permit/deny access to a protected means (12) using partial evaluation, wherein the policy distribution means (20) is connected to a storing means (14) and to a policy decision means (18),
wherein the policy distribution means (20) receives from the policy decision means (18) static attributes of a protected means (12) and is operable to construct a partial access control request from static attributes of said protected means (12) and to perform partial evaluation against an access control policy function stored in a storing means (14) using said partial access control request, resulting in a simplified access control policy function,
wherein said policy distribution means (20) is operable to send said simplified access control policy function to said policy decision means (18), thereby enabling the policy decision means (18) to use said simplified access control policy function to evaluate access control requests regarding said protected means (12), and to return a permit/deny response to a guard means (16).

2. A policy distribution means (20) according to claim 1, wherein each of said set of protected means is a resource, a subject, an action, an environment, or a combination of two or more of these alternatives.

3. A policy distribution means (20) according to claim 1 or 2, wherein said system (10) also comprises an input means (22) connected to said storing means (14), and operable to input a new access control policy function or to amend an access control policy function in said storing means (14).

4. A policy distribution means (20) according to any one of claims 1-3, wherein each of said set of protected means is connected to said guard means (16) closest to said protected means (12).

5. A policy distribution means (20) according to any one of claims 1-4, wherein said storing means (14) is in the form of a database (14).

6. A policy distribution means (20) according to any one of claims 1-5, wherein said attributes are in the form of attributes which are present, attributes which are not present and attributes which are undefined.

7. A system (10), comprising:
a storing means (14) operable to store all access control policy functions for all protected means (12),
a guard means (16) operable to guard access to a protected means (12) and to construct an access control request comprising attributes regarding said protected means (12), and
a policy decision means (18) connected to said guard means (16) and operable to receive said access control request from said guard means (16),
**characterized by** a policy distribution means (20) according to any one of Claims 1-6.

8. A method for controlling, with the aid of a system (10), distribution of an access control policy to permit/deny access to a protected means (12) using partial evaluation, said method comprises the steps:
- to receive, from a policy decision means (18) connected to a guard means (16), static attributes of said protected means (12) at a policy distribution means (20), which is connected to said policy decision means (18) and to a storing means (14) comprised in said system (10) and is operable to store access control policy functions for a set of protected means;
- to construct, at the policy distribution means (20), a partial access control request from said static attributes of said protected means (12);
- to perform, at the policy distribution means (20), partial evaluation against an access control policy function stored in said storing means (14) based on said partial access control request, resulting in a simplified access control policy function; and
- to send said simplified access control policy function from the policy distribution means (20) to said policy decision means (18),
wherein the storing means (14), the guard means (16), the policy decision means (18) and the policy distribution means (20) are comprised in said system.

9. The method according to claim 8, further comprising the steps:
- with the aid of said guard means (16), to construct an access control request comprising attributes regarding said protected means (12);
- to send said access control request to said policy decision means (18);
- to use said simplified access control policy function to evaluate access control requests regarding said protected means (12); and
- to return a permit/deny response to said guard means (16).

10. A method according to claim 8 or 9, wherein each of said set protected means is a resource, a subject, an action, an environment, or a combination of two or more of these alternatives.

11. A method according to any one of claims 8-10, wherein said method also comprises the step:
- with the aid of an input means (22) comprised in said system (10) and connected to said storing means (14), to input a new access control policy function, or to amend an access control policy function in said storing means (14).

12. A method according to any one of claims 8-11, wherein that said attributes are in the form of attributes which are present, attributes which are not present and attributes which are undefined.

13. A method according to any one of claims 8-12, wherein said step to perform partial evaluation is performed by substituting said attributes which are present in said partial access control request with values into said access control policy function.

14. At least one computer program product (102₁, ..., 102ₙ) directly loadable into the internal memory of at least one digital computer (100₁, ..., 100ₙ), comprising software code portions for performing the steps of Claim 8 when said at least one product (102₁, ..., 102ₙ) is/are run on said at least one computer (100₁, ..., 100ₙ).

## Patentansprüche

1. Richtlinienverteilungsmittel (20), das angepasst ist, in einem System (10) betrieben zu werden, das betreibbar ist, die Verteilung einer Zugriffssteuerrichtlinie unter Verwendung einer Teilauswertung zu steuern, um den Zugriff auf ein geschütztes Mittel (12) zuzulassen/zurückzuweisen,
wobei das Richtlinienverteilungsmittel (20) mit einem Speichermittel (14) und einem Richtlinienentscheidungsmittel (18) verbunden ist, wobei das Richtlinienverteilungsmittel (20) statische Attribute eines geschützten Mittels (12) vom Richtlinienentscheidungsmittel (18) empfängt und betreibbar ist, aus statischen Attributen des geschützten Mittels (12) eine Teilzugriffssteueranforderung zu konstruieren und unter Verwendung der Teilzugriffssteueranforderung mit Bezug auf eine Zugriffssteuerrichtlinienfunktion, die in einem Speichermittel (14) gespeichert ist, eine Teilauswertung durchzuführen, was in einer vereinfachten Zugriffssteuerrichtlinienfunktion resultiert,
wobei das Richtlinienverteilungsmittel (20) betreibbar ist, die vereinfachte Zugriffssteuerrichtlinienfunktion an das Richtlinienentscheidungsmittel (18) zu senden, um es dadurch dem Richtlinienentscheidungsmittel (18) zu ermöglichen, die vereinfachte Zugriffssteuerrichtlinienfunktion zu verwenden, um Zugriffssteueranforderungen, die das geschützte Mittel (12) betreffen, auszuwerten und eine Zulassungs-/Zurückweisungsantwort an ein Schutzmittel (16) zurückzugeben.

2. Richtlinienverteilungsmittel (20) nach Anspruch 1, wobei jedes des Satzes von geschützten Mitteln eine Ressource, ein Subjekt, eine Aktion, eine Umgebung oder eine Kombination von zwei oder mehr dieser Alternativen ist.

3. Richtlinienverteilungsmittel (20) nach Anspruch 1 oder 2, wobei das System (10) außerdem ein Eingabemittel (22) umfasst, das mit dem Speichermittel (14) verbunden und betreibbar ist, eine neue Zugriffssteuerrichtlinienfunktion einzugeben oder eine Zugriffssteuerrichtlinienfunktion im Speichermittel (14) zu ändern.

4. Richtlinienverteilungsmittel (20) nach einem der Ansprüche 1-3, wobei jedes des Satzes von geschützten Mitteln mit den Schutzmitteln (16), die den geschützten Mitteln (12) am nächsten sind, verbunden ist.

5. Richtlinienverteilungsmittel (20) nach einem der Ansprüche 1-4, wobei das Speichermittel (14) die Form einer Datenbank (14) aufweist.

6. Richtlinienverteilungsmittel (20) nach einem der Ansprüche 1-5, wobei die Attribute die Form von Attributen, die vorhanden sind, Attributen, die nicht vorhanden sind, und Attributen, die undefiniert sind, aufweisen.

7. System (10), das Folgendes umfasst:
ein Speichermittel (14), das betreibbar ist, alle
Zugriffssteuerrichtlinienfunktionen für alle geschützten Mittel (12) zu speichern,
ein Schutzmittel (16), das betreibbar ist, den Zugriff auf ein geschütztes Mittel (12) zu schützen und eine
Zugriffssteueranforderung zu konstruieren, die Attribute umfasst, die die geschützten Mittel (12) betreffen, und
ein Richtlinienentscheidungsmittel (18), das mit dem Schutzmittel (16) verbunden und betreibbar ist, die Zugriffssteueranforderung vom Schutzmittel (16) zu empfangen,
**gekennzeichnet durch** ein Richtlinienverteilungsmittel (20) nach einem der Ansprüche 1-6.

8. Verfahren zum Steuern der Verteilung einer Zugriffssteuerrichtlinie mithilfe eines Systems (10) unter Verwendung einer Teilauswertung, um den Zugriff auf ein geschütztes Mittel (12) zuzulassen/zurückzuweisen, wobei das Verfahren die folgenden Schritte umfasst:
- Empfangen von statischen Attributen des geschützten Mittels (12) von einem Richtlinienentscheidungsmittel (18), das mit einem Schutzmittel (16) verbunden ist, an einem Richtlinienverteilungsmittel (20), das mit dem Richtlinienentscheidungsmittel (18) und einem Speichermittel (14) verbunden ist, das im System (10) umfasst und betreibbar ist, Zugriffssteuerrichtlinienfunktionen für einen Satz von geschützten Mitteln zu speichern;
- Konstruieren einer Teilzugriffssteueranforderung aus den statischen Attributen der geschützten Mittel (12) am Richtlinienverteilungsmittel (20);
- Durchführen einer Teilauswertung mit Bezug auf eine Zugriffssteuerrichtlinienfunktion, die im Speichermittel (14) gespeichert ist, am Richtlinienverteilungsmittel (20) auf Basis der Teilzugriffssteueranforderung, was in einer vereinfachten Zugriffssteuerrichtlinienfunktion resultiert; und
- Senden der vereinfachten Zugriffssteuerrichtlinienfunktion vom Richtlinienverteilungsmittel (20) an das Richtlinienentscheidungsmittel (18),
wobei das Speichermittel (14), das Schutzmittel (16), das Richtlinienentscheidungsmittel (18) und das Richtlinienverteilungsmittel (20) in dem System umfasst sind.

9. Verfahren nach Anspruch 8, das ferner die folgenden Schritte umfasst:
- Konstruieren einer Zugriffssteueranforderung, die Attribute umfasst, die die geschützten Mittel (12) betreffen, mithilfe des Schutzmittels (16);
- Senden der Zugriffssteueranforderung an das Richtlinienentscheidungsmittel (18);
- Verwenden der vereinfachten Zugriffssteuerrichtlinienfunktion, um Zugriffssteueranforderungen, die die geschützten Mittel (12) betreffen, auszuwerten; und
- Zurückgeben einer Zulassungs-/Zurückweisungsantwort an das Schutzmittel (16).

10. Verfahren nach Anspruch 8 oder 9, wobei jedes des Satzes von geschützten Mitteln eine Ressource, ein Subjekt, eine Aktion, eine Umgebung oder eine Kombination von zwei oder mehr dieser Alternativen ist.

11. Verfahren nach einem der Ansprüche 8-10, wobei das Verfahren außerdem den folgenden Schritt umfasst:
- Eingeben einer neuen Zugriffssteuerrichtlinienfunktion oder Ändern einer Zugriffssteuerrichtlinienfunktion im Speichermittel (14) mithilfe eines Eingabemittels (22), das im System (10) umfasst und mit dem Speichermittel (14) verbunden ist.

12. Verfahren nach einem der Ansprüche 8-11, wobei die Attribute die Form von Attributen, die vorhanden sind, Attributen, die nicht vorhanden sind, und Attributen, die undefiniert sind, aufweisen.

13. Verfahren nach einem der Ansprüche 8-12, wobei der Schritt des Durchführens einer Teilauswertung durch Ersetzen der Attribute, die in der Teilzugriffssteueranforderung vorhanden sind, durch Werte in die Zugriffssteuerrichtlinienfunktion durchgeführt wird.

14. Mindestens ein Computerprogrammprodukt (102₁, ..., 102ₙ), das direkt in den internen Speicher von mindestens einem digitalen Computer (100₁, ..., 100ₙ), der Softwarecodeabschnitte zum Durchführen der Schritte von Anspruch 8 umfasst, wenn das mindestens eine Produkt (102₁, ..., 102ₙ) auf dem mindestens einen Computer (100₁, ..., 100ₙ) ausgeführt wird, ladbar ist.

## Revendications

1. Moyen de distribution de politique (20) adapté pour fonctionner dans un système (10) opérationnel afin de commander une distribution d'une politique de contrôle d'accès afin d'autoriser/refuser l'accès à un moyen protégé (12) en utilisant une évaluation partielle,
dans lequel le moyen de distribution de politique (20) est connecté à un moyen de mémorisation (14) et un moyen de décision de politique (18),
dans lequel le moyen de distribution de politique (20) reçoit depuis un moyen de décision de politique (18) des attributs statiques d'un moyen protégé (12) et est opérationnel pour construire une demande de contrôle d'accès partiel d'après les attribut statiques dudit moyen protégé (12) et effectuer une évaluation partielle par rapport à une fonction de politique de contrôle d'accès mémorisée dans un moyen de mémorisation (14) en utilisant ladite demande de contrôle d'accès partiel, résultant en une fonction de politique de contrôle d'accès simplifié,
dans lequel ledit moyen de distribution de politique (20) est opérationnel pour envoyer ladite fonction de politique de contrôle d'accès simplifié audit moyen de décision de politique (18), en permettant ainsi au moyen de décision de politique (18) d'utiliser ladite fonction de politique de contrôle d'accès simplifié pour évaluer des demandes de contrôle d'accès concernant ledit moyen protégé (12) et renvoyer une réponse d'autorisation/refus à un moyen de garde (16).

2. Moyen de distribution de politique (20) selon la revendication 1, dans lequel chacun dudit ensemble de moyens protégés est une ressource, un sujet, une action, un environnement ou une combinaison de deux ou plus de ces alternatives.

3. Moyen de distribution de politique (20) selon la revendication 1 ou 2, dans lequel ledit système (10) comprend aussi un moyen d'entrée (22) connecté audit moyen de mémorisation (14) et opérationnel pour entrer une nouvelle fonction de politique de contrôle d'accès ou amender une fonction de politique de contrôle d'accès dans ledit moyen de mémorisation (14).

4. Moyen de distribution de politique (20) selon une quelconque des revendications 1-3, dans lequel chacun dudit ensemble de moyens protégés est connecté audit moyen de garde (16) le plus proche dudit moyen protégé (12).

5. Moyen de distribution de politique (20) selon une quelconque des revendications 1-4, dans lequel ledit moyen de mémorisation (14) prend la forme d'une base de données (14).

6. Moyen de distribution de politique (20) selon une quelconque des revendications 1-5, dans lequel lesdits attributs prennent la forme des attributs qui sont présents, attributs qui ne sont pas présents et attributs qui sont indéfinis.

7. Système (10) comprenant :
un moyen de mémorisation (14) opérationnel pour mémoriser toutes les fonctions de politique de contrôle d'accès pour tous les moyens protégés (12),
un moyen de garde (16) opérationnel pour garder l'accès à un moyen protégé (12) et construire une demande de contrôle d'accès comprenant des attributs concernant ledit moyen protégé (12) et
un moyen de décision de politique (18) connecté audit moyen de garde (16) et opérationnel pour recevoir ladite demande de contrôle d'accès provenant dudit moyen de garde (16),
**caractérisé par** un moyen de distribution de politique (20) selon une quelconque des revendications 1-6.

8. Procédé de commande, à l'aide d'un système (10), de la distribution d'une politique de contrôle d'accès pour autoriser/refuser l'accès à un moyen protégé (12) en utilisant une évaluation partielle, ledit procédé comprend les étapes consistant à :
- recevoir, depuis un moyen de décision de politique (18) connecté à un moyen de garde (16), des attributs statiques dudit moyen protégé (12) au niveau d'un moyen de distribution de politique (20), qui est connecté audit moyen de décision de politique (18) et à un moyen de mémorisation (14) compris dans ledit système (10) et est opérationnel pour mémoriser des fonctions de politique de contrôle d'accès pour un ensemble de moyens protégés ;
- construire, au niveau du moyen de distribution de politique (20), une demande de contrôle d'accès partiel d'après lesdits attributs statiques dudit moyens protégés (12) ;
- effectuer, au niveau du moyen de distribution de politique (20), une évaluation partielle par rapport à une fonction de politique de contrôle d'accès mémorisée dans ledit moyen de mémorisation (14) sur la base de ladite demande de contrôle d'accès partiel, résultant en une fonction de politique de contrôle d'accès simplifié ; et
- envoyer ladite fonction de politique de contrôle d'accès simplifié du moyen de distribution de politique (20) audit moyen de décision de politique (18),
- dans lequel le moyen de mémorisation (14), le moyen de garde (16), le moyen de décision de politique (18) et le moyen de distribution de politique (20) sont compris dans ledit système.

9. Procédé selon la revendication 8, comprenant en outre les étapes consistant à :
- à l'aide dudit moyen de garde (16), construire une demande de contrôle d'accès comprenant des attributs concernant lesdits moyens protégés (12) ;
- envoyer ladite demande de contrôle d'accès audit moyen de décision de politique (18) ;
- utiliser ladite fonction de politique de contrôle d'accès simplifié pour évaluer les demandes de contrôle d'accès concernant lesdits moyens protégés (12) ; et
- renvoyer une réponse autorisation/refus audit moyen de garde (16).

10. Procédé selon la revendication 8 ou 9, dans lequel chacun dudit ensemble de moyens protégés est une ressource, un sujet, une action, un environnement ou une combinaison de deux ou plus de ces alternatives.

11. Procédé selon une quelconque des revendications 8-10, dans lequel ledit procédé comprend aussi l'étape consistant à :
- à l'aide d'un moyen d'entrée (22) compris dans ledit système (10) et connecté audit moyen de mémorisation (14), entrer une nouvelle fonction de politique de contrôle d'accès ou amender une fonction de politique de contrôle d'accès dans ledit moyen de mémorisation (14).

12. Procédé selon une quelconque des revendications 8-11, dans lequel lesdits attributs prennent la forme d'attributs qui sont présents, attributs qui ne sont pas présents et attributs qui sont indéfinis.

13. Procédé selon une quelconque des revendications 8-12, dans lequel ladite étape d'exécution d'une évaluation partielle est effectuée en substituant lesdits attributs qui sont présents dans ladite demande de contrôle d'accès partiel par des valeurs dans ladite fonction de politique de contrôle d'accès.

14. Au moins un produit de programme informatique (102₁, ..., 102ₙ) chargeable directement dans la mémoire interne d'au moins un ordinateur numérique (100₁, ..., 100ₙ) ; comprenant des portions de code logiciel pour mettre en oeuvre les étapes de la revendication 8 lorsque ledit au moins un produit (102₁, ..., 102ₙ) est/sont exécutés sur ledit au moins un ordinateur (100₁, ..., 100ₙ).
